# FASCICULE DE BREVET EUROPEEN

(11) **EP 1 885 544 B1**
(45) Date de publication et mention de la délivrance du brevet: **20.08.2008**
(21) Numéro de dépôt: 06764676.0
(22) Date de dépôt: 23.05.2006
(51) Int. Cl.: B29C 49/36, B29C 49/42

(54) **MACHINE TOURNANTE A COLONNE TOURNANTE D'ALIMENTATION FLUIDIQUE**
ROTATIONSMASCHINE MIT FLUIDZUFUHRDREHSÄULE
ROTATING MACHINE WITH FLUID SUPPLY ROTATING COLUMN

(30) Priorité: 24.05.2005 FR 0505201
(43) Date de publication de la demande: 13.02.2008
(73) Titulaire: Sidel Participations, 76930 Octeville Sur Mer (FR)
(72) Inventeur: DANEL, Laurent, c/o SIDEL PARTICIPATIONS, F-76930 Octeville-Sur-Mer (FR)
(74) Mandataire: Cabinet Plasseraud
(86) Numéro de dépôt international: PCT/FR2006/001183
(87) Numéro de publication internationale: WO 2006/125912

(56) Documents cités:
- FR-A- 1 492 016
- GB-A- 399 350
- US-A- 3 415 915

## Description

La présente invention concerne des perfectionnements apportés aux machines tournantes du type carrousel comprenant :
- un châssis tournant rotatif autour d'un axe de rotation ;
- plusieurs postes de travail supportés par le châssis tournant ;
- une colonne tournante d'alimentation fluidique, coaxiale à l'axe de rotation du châssis tournant ;
- au moins un raccord fluidique tournant, prévu sur ladite colonne et connecté à une source fixe de fluide.

L'invention vise plus particulièrement les machines tournantes de fabrication de récipients en matériau thermoplastique, notamment en PET, par soufflage ou étirage-soufflage d'une ébauche (préforme ou récipient intermédiaire) dans des moules supportés sur un bâti tournant, comme celles décrites dans FR-A-1 492 016.

L'invention peut trouver application dans des machines tournantes d'autres types tels que des remplisseuses.

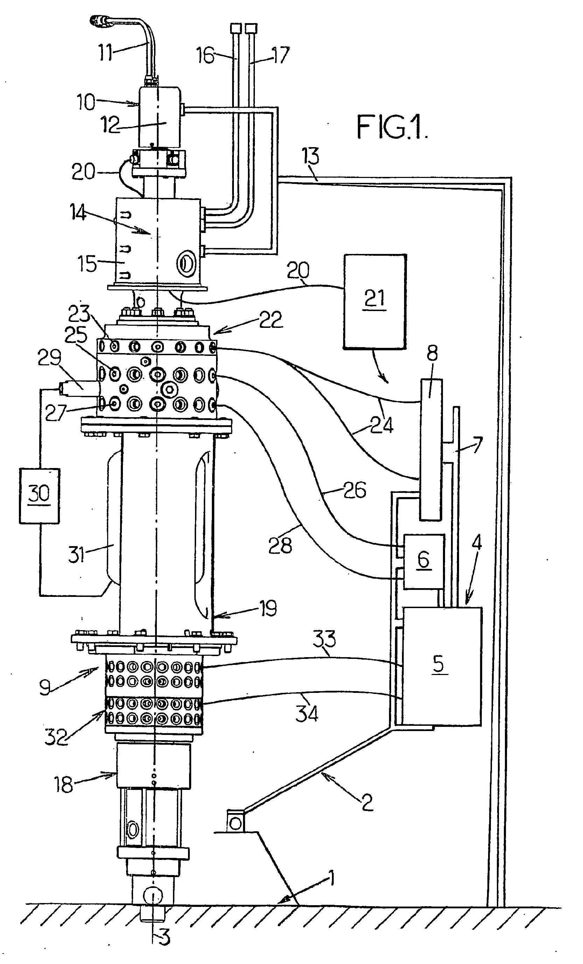

A la figure 1 des dessins annexés est illustrée, en vue de côté, une colonne tournante d'alimentation électrique et fluidique installée actuellement dans certaines machines de fabrication de récipients par soufflage ou par étirage-soufflage, produites par la demanderesse et représentant l'art antérieur le plus proche.

Les parties principales d'une telle machine sont simplement esquissées de façon très schématique à la figure 1.

La machine tournante représentée en figure 1, du type carrousel, comprend un bâti 1 fixe portant un châssis 2 tournant monté rotatif autour d'un axe 3 de rotation.

Les moyens d'entraînement en rotation ne sont pas représentés en figure 1.

Le châssis 2 tournant supporte plusieurs postes de travail 4 régulièrement répartis périphériquement.

S'agissant plus spécifiquement, dans l'exemple considéré, d'une machine d'étirage-soufflage pour la fabrication de récipients, notamment de bouteilles en matériau thermoplastique tel que le PET, chaque poste de travail 4 comporte notamment :
- un moule 5 ;
- des moyens 6 de gestion du fluide de pré-soufflage et du fluide de soufflage, et
- une tige 7 d'étirage mécanique du récipient en cours de soufflage.

Le fluide de pré-soufflage est sous une pression moyenne, de l'ordre de 13.10⁵ pascals.

Le fluide de soufflage est sous une pression relativement élevée, typiquement de 40.10⁵ pascals.

La tige 7 d'étirage mécanique du récipient en cours de soufflage est mue axialement par des moyens 8 d'actionnement, par exemple de type vérin.

Ces moyens 8 d'actionnement de la tige 7 sont alimentés sous une pression relativement faible, typiquement 7.10⁵ pascals.

La machine comporte également une colonne 9 tournante d'alimentation électrique et fluidique qui s'étend co-axialement à l'axe 3 de rotation du châssis 2 tournant.

Cette colonne 9 tournante est propre à assurer l'alimentation électrique et la fourniture des divers fluides nécessaires au fonctionnement des postes de travail 4 à partir de sources respectives fixes.

A cet effet, la colonne 9 tournante comprend un collecteur électrique 10, situé en tête de la colonne 9 tournante.

Ce collecteur électrique 10 est alimenté par un câble électrique 11 fixe.

Le collecteur électrique 10 tournant comporte des pistes fixes ou tournantes, sur lesquelles sont en appui élastique des doigts respectivement tournants ou fixes, l'ensemble étant abrité sous un carter 12.

Ce carter 12, fixe, est retenu par une structure anti-couple 13, schématisée sous forme d'une potence, solidaire du bâti 1 fixe.

Un raccord fluidique tournant 14 est disposé axialement sous le collecteur électrique 10 tournant. Seul le carter 15 de ce raccord fluidique tournant 14 est visible sur la figure 1.

Ce carter 15, fixe, est retenu par la structure anti-couple 13.

Le raccord fluidique tournant 14 est connecté par un conduit 16 à une source de fluide pneumatique sous relativement haute pression, typiquement de l'air sous 40.10⁵ pascals.

Le raccord fluidique tournant 14 est connecté par un conduit 17 à une source de fluide pneumatique sous pression relativement basse, typiquement de l'air à pression industrielle de 7.10⁵ pascals.

Les conduits 16, 17, sont fixes et supportés par exemple par la structure anti-couple 13.

La base 18 de la colonne 9 tournante d'alimentation, par laquelle elle repose sur le bâti 1 fixe, est aussi elle-même fixe. Une autre structure alternative peut être envisagée, c'est à dire que la base 18 fixe peut ne pas être raccordée au bâti 1 fixe, mais à la structure anti-couple 13.

La partie tournante de la colonne 9 tournante peut être aussi désignée par le terme rotor 19.

Les alimentations des postes de travail se font de la façon suivante.

Les câbles 20 électriques de sortie du collecteur électrique 10 tournant, sont solidaires du rotor 19 de la colonne 9 tournante.

Ces câbles 20, pour être dégagés de la structure anti-couple 13, traversent le raccord fluidique tournant 14 en étant fonctionnellement associés au rotor 19 et, au débouché du raccord fluidique tournant 14, sont connectés à une armoire 21 de distribution électrique supportée par le châssis 2 tournant.

Cette armoire 21 est affectée à l'alimentation électrique des composants électriques des postes de travail 4, notamment les électrovannes.

Le fluide pneumatique est acheminé, en sortie du raccord tournant 14, en direction d'un distributeur 22 fluidique tournant.

Ce distributeur 22 fluidique tournant est situé sous le raccord fluidique tournant 14 et comporte :
- un premier étage 23 de raccords répartis périphériquement pour la distribution du fluide pneumatique sous basse pression ;
- un deuxième étage 25 de raccords répartis périphériquement pour la distribution du fluide pneumatique sous haute pression de soufflage ;
- un troisième étage 27 de raccords répartis périphériquement pour la distribution du fluide pneumatique sous moyenne pression pré-soufflage.

Le premier étage 23 de raccords est connecté en 24 aux moyens 8 d'actionnement de la tige 7 d'étirage.

Le deuxième étage 25 de raccords est connecté en 26 aux moyens 6 de gestion du fluide de pré-soufflage / soufflage précité.

Le troisième étage 27 de raccords est connecté en 28 aux moyens 6 de gestion du fluide de pré-soufflage / soufflage précité.

Le fluide sous moyenne pression, typiquement 13.10⁵ pascals est obtenu en prélevant du fluide sous haute pression en 29 sur l'étage correspondant du distributeur 22 fluidique tournant, ce fluide sous haute pression étant détendu dans un détendeur 30 externe à la colonne 9 pour l'amener à la pression requise.

Ce fluide détendu est stocké dans un réservoir tampon 31, par exemple intégré dans une structure du rotor 19 comme représenté en figure 1.

Sous le réservoir tampon 31, le rotor 19 comporte un distributeur 32 de liquides agencé pour la distribution en 33 et 34, à chaque poste de travail, de l'eau et/ou de l'huile nécessaires notamment pour la régulation de température des moules 5.

Globalement, la colonne 9 tournante représentée en figure 1 comporte, de haut en bas :
- un collecteur électrique 10 tournant ;
- un raccord fluidique tournant 14 ;
- un distributeur 22 fluidique tournant ;
- un réservoir tampon 31 de fluide pneumatique à moyenne pression ;
- un distributeur 32 tournant pour l'eau et l'huile ;
- une base 18 fixe.

Une colonne 9 tournante d'alimentation électrique et fluidique agencée comme il vient d'être décrit équipe actuellement un grand nombre de machines fabriquées par la demanderesse et donne toute satisfaction sur le plan fonctionnel.

Toutefois, cette colonne connue présente divers inconvénients inhérents à sa structure.

En premier lieu, du fait de ses nombreux composants placés les uns sur les autres, à savoir un collecteur électrique 10 tournant, un raccord fluidique tournant 14, un distributeur 22 fluidique tournant, un réservoir tampon 31 de fluide pneumatique à moyenne pression, un distributeur 32 tournant pour l'eau et l'huile et une base 18 fixe, cette colonne 9 présente une grande hauteur.

Afin de diminuer l'encombrement et le volume occupé par une machine tournante de type carrousel, il serait donc particulièrement intéressant de réaliser une colonne tournante avec une hauteur réduite.

En deuxième lieu, il s'avère, dans la pratique, que les interventions sur le collecteur électrique 10 tournant, situé tout en haut de la colonne, sont relativement rares, tandis que les interventions sur le raccord fluidique tournant 14 ou le distributeur 22 fluidique tournant, placés sous le collecteur électrique 10, sont relativement régulières.

Il est notamment nécessaire de remplacer régulièrement les joints d'étanchéité entre les parties fixes et les parties tournantes du raccord fluidique tournant 14 ou du distributeur 22 fluidique tournant, ces joints ayant une durée de vie relativement brève en raison des contraintes mécaniques importantes qu'ils subissent.

Pour permettre le remplacement de joints usés dans le raccord fluidique tournant 14 ou le distributeur 22 fluidique tournant, il est tout d'abord nécessaire de démonter le collecteur électrique 10 avant d'accéder au raccord fluidique tournant 14. Cette opération de démontage du collecteur électrique 10 est relativement longue et présente des risques d'endommagement du collecteur électrique 10 alors qu'aucune opération de maintenance ne doit être effectuée sur ce collecteur électrique 10.

En outre, l'accessibilité aux organes fluidiques est limitée.

Il serait donc particulièrement intéressant aux yeux de la pratique de réaliser une colonne tournante ne nécessitant pas de démontage du collecteur électrique 10 quand des opérations de maintenance doivent être effectuées sur le raccord fluidique tournant 14 ou le distributeur 22 fluidique tournant.

Il existe donc, de la part des utilisateurs, une demande pressante pour que des améliorations soient apportées à la colonne tournante de manière à en simplifier la maintenance, afin que les machines deviennent plus performantes et plus productives.

L'invention a donc pour but de proposer une colonne tournante d'alimentation à structure perfectionnée qui réponde mieux aux diverses exigences de la pratique, à savoir une colonne tournante à hauteur réduite par rapport à l'art antérieur et sur laquelle certaines opérations de maintenance peuvent être facilement et rapidement réalisées, notamment l'opération de remplacement de joints d'étanchéités entre partie fixe et partie mobile.

A ces fins, l'invention propose une machine tournante de type carrousel comportant :
- un châssis tournant rotatif autour d'un axe de rotation ;
- plusieurs postes de travail supportés par le châssis tournant ;
- une colonne tournante d'alimentation en fluides, coaxiale à l'axe de rotation du châssis tournant ;
caractérisée en ce qu'elle comprend un élément de colonne pourvu de deux ensembles mobiles en rotation l'un par rapport à l'autre, autour dudit axe de rotation, un premier ensemble comportant un faisceau d'au moins deux conduits axiaux, le second ensemble comportant un corps tubulaire axial pourvu d'au moins deux étages d'orifices traversants radiaux, les conduits axiaux du premier ensemble s'étendant sur des longueurs différentes dans l'espace délimité par ledit corps, chaque conduit débouchant au droit d'un étage donné d'orifices traversants, l'élément de colonne définissant ainsi un raccord tournant de distribution d'au moins deux fluides vers les postes de travail de la machine, et en ce qu'une chemise est interposée entre ledit corps tubulaire du second ensemble et le premier ensemble.

Selon diverses réalisations, la machine présente les caractéristiques suivantes, le cas échéant combinées :
- la chemise est fixée de manière amovible au corps tubulaire du second ensemble ;
- la chemise est constituée de plusieurs cassettes :
- le premier ensemble comprend au moins deux tubes concentriques, le tube le plus intérieur formant un premier conduit axial débouchant au droit d'un premier étage d'orifices radiaux traversants du corps tubulaire, lesdits au moins deux tubes délimitant entre eux un espace annulaire formant un deuxième conduit axial débouchant au droit d'un deuxième étage d'orifices radiaux traversants du corps tubulaire ;
- le premier ensemble comprend un arbre et au moins deux conduits axiaux parallèles débouchant chacun au droit d'un étage d'orifices radiaux traversants du corps tubulaire ;
- le premier ensemble est fixe, le deuxième ensemble étant rotatif;
- le deuxième ensemble est placé en partie supérieure de l'élément de colonne ;
- le premier ensemble comprend un premier élément, inférieur, s'étendant en dessous du corps tubulaire et un deuxième élément supérieur, s'étendant dans l'espace délimité par le corps tubulaire ;
- le deuxième élément est pourvu de portées étagées externes sur lesquelles la chemise est montée en appui ;
- le deuxième élément est pourvu de portées étagées internes sur lesquelles viennent en appui des tubes concentriques formant les conduits axiaux ;
- le premier élément est pourvu de portées étagées sur lesquelles viennent en appui lesdits tubes concentriques.

Grâce à ces dispositions, la durée minimum de fonctionnement sans maintenance, pour une colonne agencée conformément à l'invention, est de l'ordre de 7500 heures, soit environ un an de fonctionnement. Plus précisément, la durée de vie du raccord est typiquement de quatre ans. A raison de 7500 heures par an et de 33 tours par minute, cette durée de vie représente environ 60 millions de tours.

De plus, l'intervention de maintenance, par exemple lors du remplacement des joints dans la colonne tournante, entre partie fixe et partie mobile, est de courte durée, typiquement deux heures, et peut s'effectuer en place, dans la machine, sans déconnecter les différents flexibles.

L'intervention de maintenance peut également être effectuée par le dessus du raccord, l'axe de rotation étant vertical.

Ainsi, une grande ergonomie et une grande facilité de montage et démontage est obtenue, les pièces du raccord ayant un poids relativement faible compatible avec une intervention manuelle.

D'autres objets et avantages de l'invention apparaîtront au cours de la description de modes de réalisation préférés donnés uniquement à titre d'exemples non limitatifs. Dans la description, on se réfère aux dessins annexés sur lesquels :
- la figure 1 est une vue schématique très simplifiée d'une machine tournante pourvue d'une colonne tournante d'alimentation électrique et fluidique de l'état de la technique montrée de façon relativement détaillée ;
- la figure 2 est une vue en perspective d'un élément de colonne selon l'invention, dans un mode de réalisation ;
- la figure 3 est une vue de dessus de l'élément représenté en figure 2 ;
- la figure 4 est une vue de face et en écorché partiel de la partie supérieure de l'élément représenté en figure 2 ;
- la figure 5 est une vue en coupe longitudinale de la partie supérieure de l'élément représenté en figure 2 ;
- la figure 6 est une vue en coupe longitudinale de la partie inférieure de l'élément représenté en figure 2, les plans de coupe de la figure 5 et de la figure 6 étant identiques ;
- la figure 7 est une vue de détail en coupe longitudinale de l'élément représenté en figure 2, le plan de coupe de la figure 7 étant le même que le plan de coupe des figures 5 et 6, la partie supérieure et la partie inférieure de l'élément de colonne étant représentés sur cette figure 7 ;
- la figure 8 est une vue en coupe d'un deuxième mode de réalisation d'un élément de colonne de machine tournante selon l'invention.

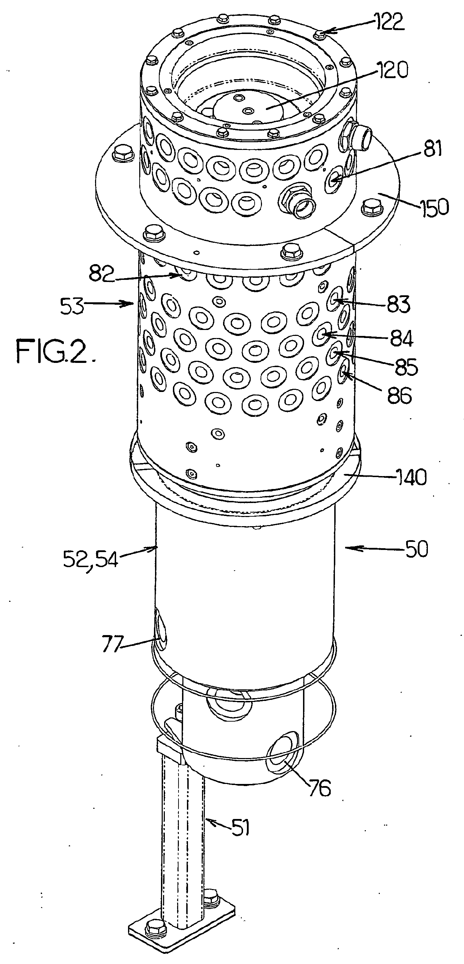

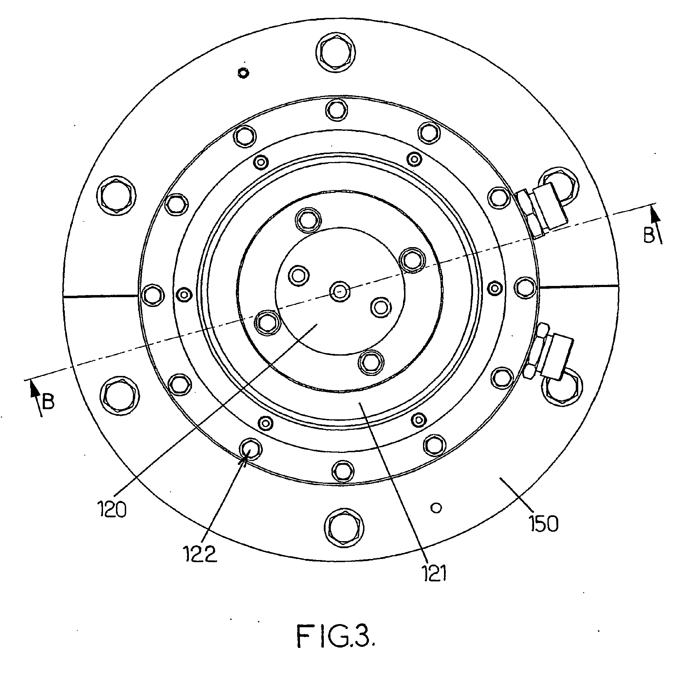

On se rapporte tout d'abord aux figures 2 à 7.

L'élément de colonne 50 représenté est monté sur un support anti-couple 51, inférieur.

Cet élément de colonne 50, lorsque vu extérieurement, comporte deux ensembles, 52 53, mobiles en rotation l'un par rapport à l'autre, un premier 52 de ces ensembles, ici en position inférieure, étant fixe, le second 53, en position supérieure, étant mobile.

L'on va décrire tout d'abord le premier ensemble 52, fixe.

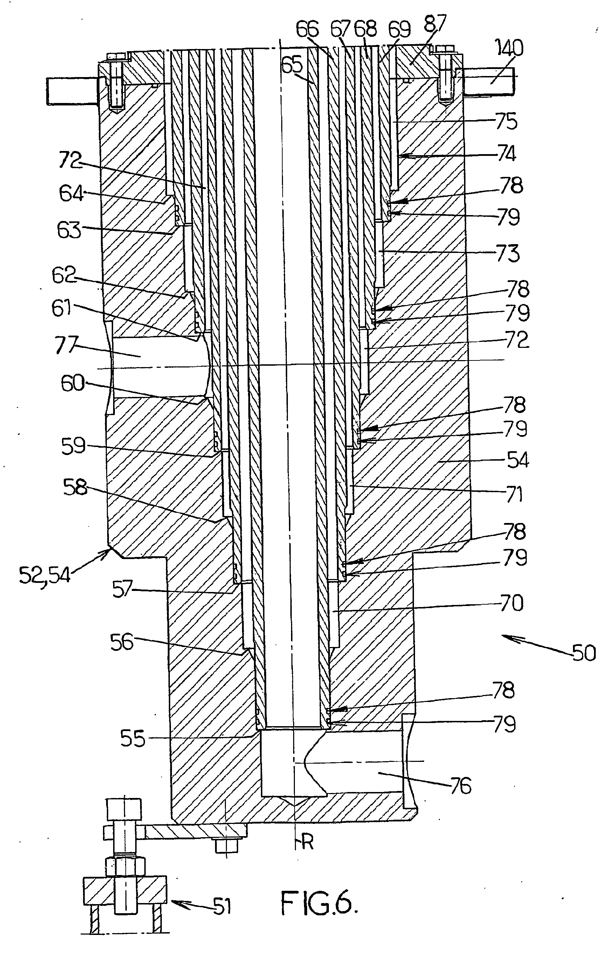

Ce premier ensemble 52 comprend un premier élément 54 inférieur tubulaire, d'axe R, pourvu de plusieurs épaulements étagés, typiquement dix épaulements 55 - 64 étagés (figure 6) dans l'exemple envisagé.

Le premier élément 54 inférieur tubulaire du premier ensemble 52 loge un nombre correspondant de tubes pleins concentriques, ici cinq tubes 65-69. De façon arbitraire, on nomme le premier tube 65 le tube le plus interne et le cinquième tube 69 le tube le plus externe, les deuxième 66, troisième 67 et quatrième 68 tubes étant respectivement les tubes successivement placés concentriquement entre le premier tube 65 et le cinquième tube 69.

Chacun des cinq tubes 65-69 est en appui sur un desdits épaulements 55, 57, 59, 61, 63 internes au premier élément 54 inférieur tubulaire, de manière telle qu'un seul épaulement 56, 58, 60, 62, 64 libre est prévu entre deux épaulements 55, 57, 59, 61, 63 immédiatement voisins sur lesquels est en appui un des tubes 65-69.

Ainsi, de par la non-occupation de certains épaulements 56, 58, 60, 62, 64 par les tubes 65-69, chaque paire de tubes 65-69 immédiatement voisins délimite un espace axial annulaire 70-73 de passage de fluide, ces passages étant non communicants entre eux.

Le cinquième tube 69, le plus externe par rapport à l'axe R, et l'alésage de plus grand diamètre 74 du premier élément 54 inférieur tubulaire délimitent un espace annulaire 75 concentrique aux espaces annulaires 70-73.

Les espaces annulaires 70-73, 75 définissent cinq premiers passages (ou conduits) de fluides distincts, et le volume interne cylindrique du premier tube 65, le plus interne, définit un sixième espace axial annulaire (ou conduit) 65a de passage de fluide.

Chacun de ces six espaces de passages de fluides 65a, 70-73, 75, qui est indifféremment appelé "passage" ou "conduit" dans le suite de la description, est en liaison avec un orifice d'entrée ou de sortie, radial, pour le fluide destiné à circuler, de bas en haut ou de haut en bas, dans l'élément de colonne 50.

Ces orifices radiaux sont répartis sur la périphérie du premier élément 54 inférieur tubulaire, de sorte que seuls deux d'entre ces orifices sont visibles sur les figures, à savoir :
- l'orifice radial 76 le plus inférieur, d'entrée ou de sortie de fluide dans le tube 65 le plus interne, le fluide circulant alors dans le passage 65a ;
- l'orifice radial 77 d'entrée ou de sortie de fluide dans le troisième espace annulaire 72 de passage de fluide, espace délimité par le troisième tube 67 et quatrième tube 68.

D'autres orifices radiaux, mais non représentés sur les figures par mesure de clarté, sont également prévus sur la périphérie du premier élément 54 inférieur tubulaire du premier ensemble 52, un orifice radial étant prévu débouchant dans chacun des espaces annulaires 65a, 70-73, 75.

Chacun des tubes 65-69 est pourvu, sur sa face externe, de deux gorges 78, 79 annulaires logeant des joints d'étanchéité.

Les épaisseurs radiales des tubes 65-69 sont sensiblement identiques.

Ces tubes 65-69 sont avantageusement pourvus d'un traitement ou d'un matériau anti-corrosion, de même que le premier élément 54 inférieur tubulaire du premier ensemble 52.

Les joints logés dans les gorges 78, 79 sont sensiblement identiques.

Seule la longueur axiale des tubes 65-69 les différencie nettement, la longueur allant en décroissant du premier tube 65, le plus interne, au cinquième tube 69, le plus externe.

La disposition qui vient d'être décrite permet une fabrication économique des tubes 65-69.

De par la formation de dix (dans l'exemple considéré) épaulements 55-64 internes étagés, le premier élément 54 inférieur tubulaire est pourvu de dix alésages cylindriques successifs, d'axe R, dont le diamètre est croissant de bas en haut du premier élément 54 inférieur tubulaire, et les tubes 65-69 ont des diamètres externes qui correspondent sensiblement à un diamètre d'alésage.

Ainsi, lors du montage des tubes 65-69 dans le premier élément 54 inférieur tubulaire du premier ensemble 52, les joints d'étanchéité portés par chacun des tubes ne frottent que sur une courte distance contre la masse du premier élément 54 inférieur tubulaire du premier ensemble 52, cette distance étant au maximum celle mesurée suivant l'axe R entre deux épaulements 55-64 annulaires voisins.

A titre indicatif, dans une réalisation équipant une machine fabriquée par la demanderesse, la hauteur du premier élément 54 inférieur tubulaire du premier ensemble 52 est de 550 mm environ, la distance entre épaulements voisins variant de 20 à 50 mm environ.

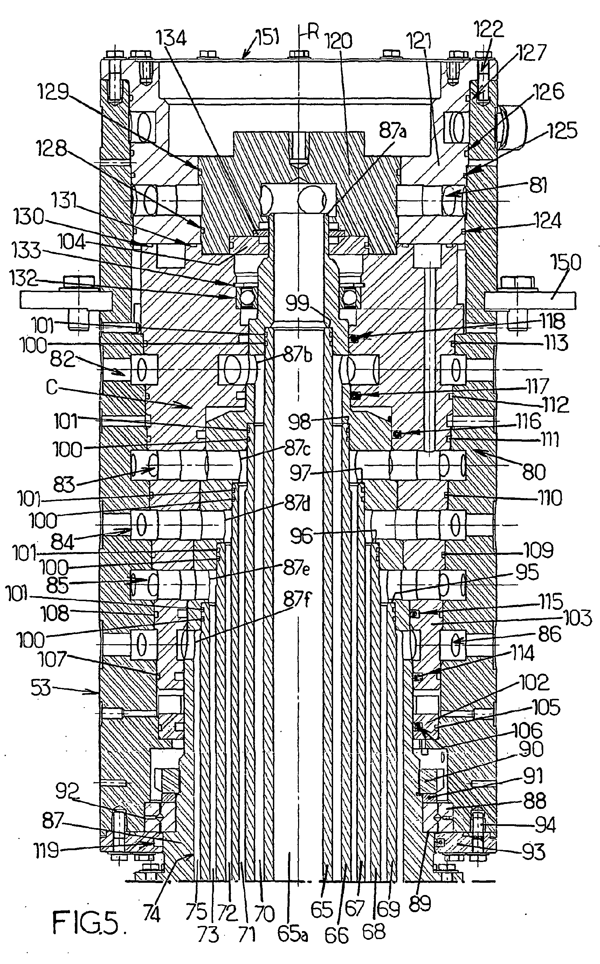

Il est maintenant décrit le second ensemble 53, mobile, et les éléments fixes logés dans l'espace défini par cet ensemble 53, mobile (figure 5).

Cet ensemble 53, mobile, comprend un premier élément 80 tubulaire extérieur, encore appelé corps tubulaire 80 pourvu d'orifices radiaux 81-86 disposés suivant plusieurs étages.

Chacun des étages d'orifices radiaux 81-86 correspond au débouché d'un des six passages de fluide 65a, 70-73, 75 définis précédemment.

Le premier tube 65 le plus interne est au droit d'un premier étage, supérieur d'orifices ou trous traversants radiaux 81 et le fluide circulant dans le volume interne 65a du premier tube 65 débouche dans ce premier étage le plus supérieur.

Puis, de haut en bas du second ensemble 53, mobile, l'on trouve :
- un deuxième étage d'orifices radiaux 82 dans lesquels débouche le premier espace annulaire 70 délimité par les premier et deuxième tubes 65, 66 ;
- un troisième étage d'orifices radiaux 83 dans lesquels débouche le deuxième espace annulaire 71 délimité par les deuxième et troisième tubes 66, 67 ;
- un quatrième étage d'orifices radiaux 84 dans lesquels débouche le troisième espace annulaire 72 délimité par les troisième et quatrième tubes 67, 68 ;
- un cinquième étage d'orifices radiaux 85 dans lesquels débouche le quatrième espace annulaire 73 délimité par les quatrième et cinquième tubes 68, 69 ;
- un sixième étage d'orifices radiaux 86 dans lesquels débouche le cinquième espace annulaire 75 délimité par le cinquième tube 69 et un arbre 87 tubulaire, monté solidaire sur le premier élément 54 inférieur tubulaire du premier ensemble 52, fixe.

Ainsi, l'arbre 87 forme un deuxième élément fixe du premier ensemble 52 de l'élément de colonne 50.

De cette manière, l'arbre 87 forme avec les tubes 65-69 et le premier élément 54 inférieur tubulaire le premier ensemble fixe 52. Selon un mode de réalisation préférentiel, l'arbre 87, les tubes 65-69 et le premier élément 54 du premier ensemble 52 sont des éléments amovibles les uns des autres, étant entendu qu'il est possible de réaliser ce premier ensemble fixe 52 sous la forme d'une pièce monobloc.

Cet arbre 87 s'étend axialement dans le volume délimité par le premier élément 80 du second ensemble 53, mobile.

De manière plus précise, l'arbre 87 présente une extrémité supérieure tubulaire 87a ouverte débouchant dans le premier étage supérieur d'orifices radiaux traversants 81.

Un roulement 88 est placé entre l'arbre 87 et le premier élément 80, ou corps, tubulaire externe du second ensemble 53, mobile.

Ce roulement 88 est par exemple à rouleaux croisés.

La bague intérieure du roulement 88 est en appui contre un épaulement 89 annulaire de l'arbre 87. Un écroù 90 à encoches est vissé contre l'arbre 87 et maintient la bague intérieure du roulement 88, une rondelle 91 étant placée entre l'écrou 90 et la bague intérieure du roulement 88.

L'écrou 90 à encoches est par exemple en acier inoxydable type 304 L. La rondelle 91 est par exemple en alliage d'aluminium, série 5000 avec anodisation.

La bague extérieure du roulement 88 est logée dans une gorge 92 interne au premier élément 80 du second ensemble 53. Cette bague extérieure est également en appui sur le couvercle 93 inférieur de ce second ensemble 53.

Le couvercle 93 inférieur est par exemple en alliage d'aluminium, série 5000, anodisé. Il est vissé en 94 sur le premier élément 80 ou corps tubulaire axial du second ensemble 53.

L'arbre 87 est pourvu de cinq épaulements 95-99 étagés sur chacun desquels vient en appui la partie supérieure d'un tube 65-69.

L'arbre 87 présente sur son pourtour extérieur, en dessous de chacun des épaulements 95-99 des orifices traversants radiaux 87b, 87c, 87d, 87e, 87f dans lesquels débouchent les deuxième à sixième étages d'orifices radiaux traversants 82-86 du premier élément 80 tubulaire ainsi que les premier à cinquième espaces annulaires 70-73, 75, le sixième espace annulaire 65a défini par le volume interne du tube 65 le plus interne débouchant dans l'étage supérieur d'orifices radiaux traversants 81.

Les espaces axiaux annulaires 65a, 70-73, 75 délimités par au moins un tube 65-69 axial forment avec les orifices radiaux traversants 87b, 87c, 87d, 87e, 87f prévus sur le pourtour de l'arbre 87 une pluralité de conduits axiaux de circulation de fluide non communicants les uns avec les autres et débouchant au droit d'un étage donné d'orifices traversants radiaux 81-86 prévus dans le corps tubulaire 80.

De cette manière, de par la formation de plusieurs conduits de circulation fluidique non communicants les uns avec les autres, il constitue un raccord tournant de distribution d'au moins deux fluides vers les postes de travail de la machine.

Chacun des tubes 65-69 est pourvu en face externe, de deux gorges 100-101 analogues aux gorges 78-79, ces gorges 100-101 logeant chacune un joint d'étanchéité.

Une chemise C, avantageusement du type amovible, est prévue entre le pourtour extérieur de l'arbre 87 et le pourtour intérieur du corps tubulaire 80, la chemise C étant fixée sur le corps tubulaire 80.

La chemise C présente avantageusement une pluralité d'orifices radiaux traversants reliant les orifices radiaux 87b, 87c, 87d, 87e, 87f de l'arbre 87 aux deuxième à sixième étages d'orifices radiaux 82-86 du corps tubulaire 80.

Selon un mode de réalisation préférentiel, la chemise C est constituée d'une pluralité de cassettes 102-104 logées entre l'arbre 87 et le premier élément 80, ou corps tubulaire, du second ensemble 53, étant entendu qu'il est également possible de réaliser la chemise C de manière monobloc.

Il est entendu par chemise C ou cassette 102-104 tout élément apte à se fixer sur le corps tubulaire 80, à s'emmancher sur l'arbre 87 et à permettre la réalisation d'une interface de liaison et de contact entre une partie fixe et une partie mobile.

Afin de permettre la liaison étanche entre le premier ensemble 52, fixe, et le second ensemble 53, mobile, les cassettes 102-104 sont pourvues, sur leurs pourtours intérieur et extérieur, de joints, toriques ou frottants, logés dans des gorges annulaires.

Ainsi, la première cassette 102 inférieure est pourvue :
- d'un joint 105, torique, externe en appui sur la face interne du premier élément 80, ou corps tubulaire 80, du second ensemble 53 et
- d'un joint 106 d'étanchéité, frottant interne en appui sur la face externe de l'arbre 87.

La deuxième cassette 103 intermédiaire est, de même, pourvue :
- de joints 107-113, d'étanchéité, toriques, externes en appui contre la face interne du premier élément 80, ou corps tubulaire 80, du second ensemble 53 et
- de joints 114-118, d'étanchéité, frottants en appui sur la face externe de l'arbre 87.

Les joints 106, 114-118, frottants de diamètre ad hoc, sont par exemple de type PTFE chargé, de même que le joint 119 frottant, prévu sur le couvercle 93 inférieur, en appui contre la face externe de l'arbre 87.

La troisième cassette 104 supérieure est logée dans une réservation inférieure d'un bouchon 120 central, ce bouchon 120 central étant lui-même placé dans un second bouchon 121 vissé en 122 sur la partie supérieure du premier élément 80, ou corps tubulaire 80, du second ensemble 53.

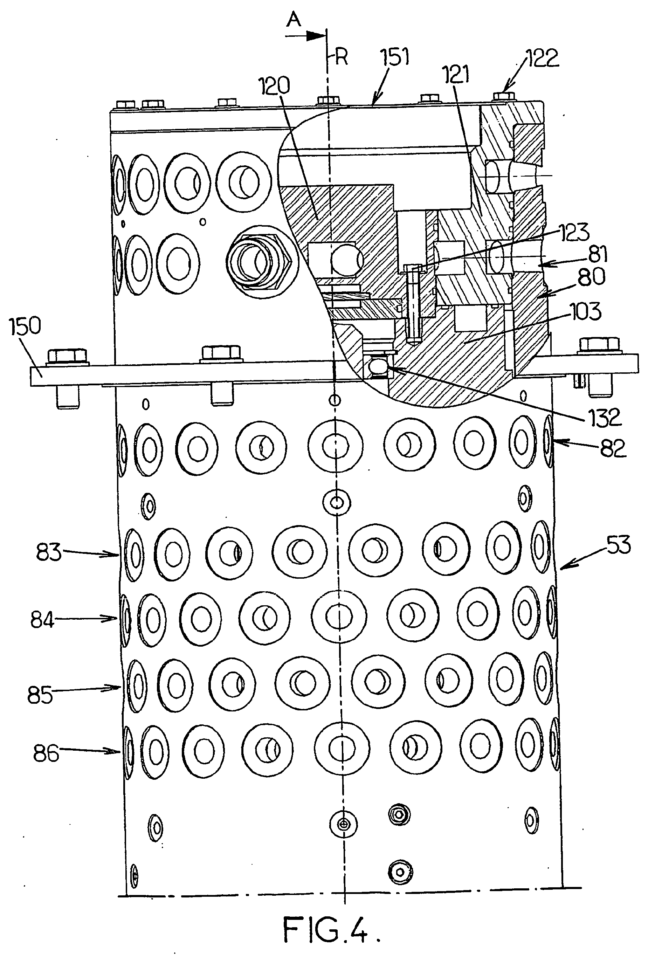

Le bouchon 120 central est vissé en 123 sur la deuxième cassette 103 (figure 4).

Des joints 124-127 toriques sont disposés dans des gorges annulaires externes du second bouchon 121, ces joints 124-127 étant en appui contre la face interne du premier élément 80, ou corps tubulaire 80, du second ensemble 53, mobile.

Des joints 128-129 toriques sont également placés entre le bouchon 120 central et le second bouchon 121, par exemple dans des gorges ménagées à cet effet dans le bouchon 120 central.

De même, des joints 130, 131 toriques sont placés entre la surface supérieure de la deuxième cassette 103 et la surface inférieure du second bouchon 121.

Un roulement 132, par exemple à billes et de type connu en soi, est monté entre l'arbre 87 et la deuxième cassette 103.

Le maintien de ce roulement 132 sur son appui est par exemple assuré au moyen d'un circlips 133 ou anneau élastique.

La fixation des cassettes 102-104 sur le premier élément 80, ou corps tubulaire 80, du second ensemble 53 est assurée, par exemple, au moyen de vis radiales.

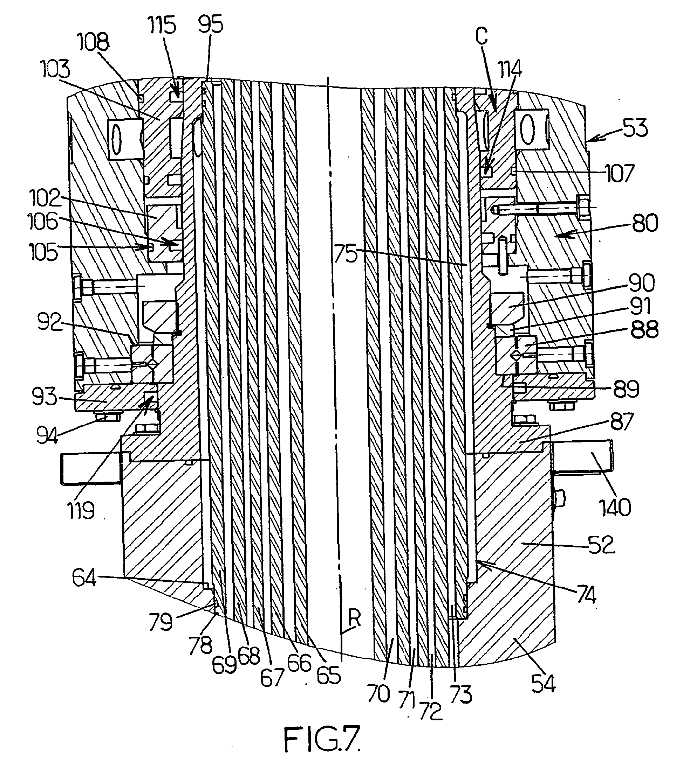

Une goulotte 140 annulaire est fixée sur le premier élément 54 tubulaire fixe du premier ensemble 52 de l'élément de colonne 50, cette goulotte permettant la récupération de l'eau qui s'écoulerait accidentellement sur la paroi externe du premier élément (ou corps tubulaire) 80 (figures 6 et 7).

Le montage qui vient d'être décrit présente de très nombreux avantages par rapport aux montages antérieurs.

L'élément de colonne 50 présente une grande compacité, sa hauteur étant par exemple de l'ordre de 1200 mm lorsque cet élément équipe une machine d'étirage soufflage de capacité de production standard de la demanderesse.

L'élément de colonne 50 ne comporte pas moins de six passages de fluides indépendants, les alimentations de ces passages étant effectuées radialement, dans le premier élément 54 du premier ensemble 52 de l'élément de colonne 50. Les longs conduits 16 et 17 représentés en figure 1 sont ainsi évités et la hauteur de la colonne d'alimentation est ainsi réduite.

L'anti-couple 51 est placé en partie inférieure de l'élément de colonne 50, et est par exemple monté entre le châssis fixe d'une machine tournante et le premier ensemble 52, fixe, de l'élément de colonne 50. La potence correspondant à la structure anti-couple 13 en figure 1 est ainsi évitée. Ainsi, le volume occupé par la colonne tournante selon l'invention est réduit.

La partie tournante de l'élément de colonne 50 peut être fixée à la roue mobile d'une machine tournante, par exemple au moyen d'une bride 150, cette fixation pouvant être placée à faible hauteur par rapport au sol, du fait de la compacité de l'élément de colonne 50.

Lorsque cet élément de colonne 50 est intégré dans une machine tournante de soufflage de récipients, les six passages de fluide permettent :
- un circuit d'air basse pression, par exemple 7 bars, pour la commande d'actionneurs ;
- un circuit d'air haute pression, par exemple 40 bars, pour le présoufflage et le soufflage ;
- un circuit aller et un circuit retour pour le fluide de refroidissement du corps des récipients ;
- un circuit aller et un circuit retour pour le fluide de refroidissement des cols et fonds de récipients.

L'élément de colonne 50 constitue alors un raccord tournant air/eau très compact.

Avantageusement, tant pour le premier ensemble 52, fixe, que pour le pour le second ensemble 53, mobile, de l'élément de colonne 50, tous les points de raccordement sont munis de taraudage BSPP conformes aux normes ISO 1179/DIN 3852 forme E.

Avantageusement, un circuit supplémentaire, par exemple pour de l'air sous moyenne pression, est obtenu par une détente d'un circuit haute pression, cette détente étant effectuée dans le coeur de l'élément de colonne 50. Le détendeur 30 externe, qui apparaît sur la figure 1, est ainsi évité.

Lorsque l'élément de colonne 50 est intégré dans une machine tournante, les interventions de maintenance peuvent être effectuées par le haut de l'élément de colonne 50 formant raccord air/eau, les pièces constitutives de l'élément de colonne 50 étant de poids relativement faible.

En effet, le dévissage de la plaque 151 supérieure transversale et son enlèvement donne accès aux bouchons 120, 121.

Puis, le bouchon 120 central peut être dévissé de la deuxième cassette 103 et ôté, donnant accès manuel à la troisième cassette 104 et à une entretoise 134, du type rondelle placée au-dessus de la troisième cassette 104 autour de l'embouchure 87a de l'arbre 87.

Après retrait du bouchon 120 central, de la troisième cassette 104 et de l'entretoise 134, le dévissage du bouchon 121 et son enlèvement donnent accès à la deuxième cassette 103.

De cette manière, il est possible de démonter facilement et rapidement le raccord tournant selon l'invention et, par exemple, de remplacer les différents joints 105-118 prévus sur les faces interne et externe de la chemise C ou des cassettes 102-104.

L'enlèvement de la deuxième cassette 103 donne également accès à l'arbre 87. Le couvercle 93 inférieur et le premier élément 80 peuvent être démontés, l'arbre 87 étant ainsi accessible.

Le premier élément 80, ou corps tubulaire 80, du second ensemble 53, mobile, est pourvu d'épaulements internes étagés qui assurent que les joints 105, 107-113 prévus sur le pourtour extérieur des cassettes 102-104 ne frottent que sur une faible longueur du premier élément 80, lors de la mise en place ou du retrait des cassettes 102-104.

Cette disposition permet également de limiter les risques de détérioration des joints 105, 107-113, 124-127 lors des opérations de maintenance.

De même, l'arbre 87 est pourvu d'épaulements externes étagés, de sorte que les joints 106, 114-118 frottants prévus sur le pourtour intérieur de chaque cassette 102-104 ne frottent pas sur une grande surface de l'arbre 87 lors de la mise en place ou de l'enlèvement des cassettes 102-104.

Cette disposition permet de limiter les risques de détérioration des joints 106, 114-118 frottants lors des opérations de maintenance.

Un exemple de mise en oeuvre des différents circuits de fluide et de fonctionnement de l'élément de colonne 50 va maintenant être décrit, dans le cadre d'une machine de soufflage, conçue par la demanderesse.

A titre indicatif, la partie mobile de l'élément tourne, dans de telles machines, à une vitesse de l'ordre de 33 tours par minute. Le temps nécessaire à l'arrêt d'urgence est de l'ordre de 0,8s. L'élément de colonne 50 est de constitution robuste, les fuites admissibles étant très faibles, inférieures à 0,01%. Le nombre de postes de soufflage peut varier d'une machine à l'autre, par exemple 9, 12 ou 18 postes.

### Circuit air 40 bars

L'air sous forte pression est introduit dans l'élément de colonne 50 par l'orifice radial 76, ménagé dans la partie inférieure tubulaire fixe 52 de cet élément de colonne 50.

Cet air sous forte pression est présent dans le circuit lorsqu'il y a des récipients à souffler dans les moules 5.

Cet air passe dans le volume interne 65a du tube 65 le plus interne à l'élément de colonne 50, puis passe au travers d'orifices radiaux prévus dans le bouchon 120 central, puis au travers d'orifices radiaux traversants prévus dans le second bouchon 121, pour ressortir au premier étage d'orifices radiaux traversants 81 du corps tubulaire 80.

Le débit d'air est fonction du nombre de postes et de la cadence de la machine de soufflage. A titre indicatif, un débit de l'ordre de 3500 m³/h peut s'avérer nécessaire.

La pression maximale de soufflage est typiquement de l'ordre de 40 bars, dans les machines actuelles de la demanderesse. Cette pression sera celle d'entrée dans l'orifice radial 76, communiquant avec le tube 65 central le plus interne à l'élément de colonne 50.

### Circuit d'air 7 bars

L'air sous basse pression (typiquement de 7 bars environ) est destiné à alimenter les moyens 8 d'actionnement tels que les vérins des tiges 7 décrites en référence à la figure 1.

Cet air entre en partie fixe inférieure de l'élément de colonne 50, dans un orifice radial ménagé dans la partie inférieure tubulaire fixe 52 de l'élément de colonne 50, cet orifice débouchant dans le premier conduit ou espace axial annulaire 70 délimité par le premier et le deuxième tubes 65, 66 concentriques.

Cet air sort ensuite du second tube 66, circule dans un orifice radial 87b prévu sur le pourtour de l'arbre 87 et débouche à hauteur du deuxième étage d'orifices radiaux traversants 82, l'air passant ensuite, en sortie de cet orifice radial 87b, au travers d'orifices traversants prévus dans la deuxième cassette 103 pour finalement ressortir du corps tubulaire 80 par les orifices radiaux prévus dans le deuxième étage d'orifices radiaux 82.

Le débit dans ce circuit d'air sous basse pression sera donc fonction du nombre de postes et de la cadence de machine. A titre indicatif, un débit de fonctionnement de 600 m³/h peut s'avérer nécessaire.

### Circuit aller retour d'eau pour refroidissement des corps de récipients

Le débit sera fonction du nombre de postes et de la cadence de machine. Le débit maximum nécessaire sera par exemple de 11m³ par heure.

La pression de fonctionnement maximum sera de 10 bars en entrée de raccord. La pression de fonctionnement courante sera de quatre bars en entrée de raccord.

Selon le même principe tel que précédemment décrit pour les circuits d'air à 40 bars et à 7 bars, les autres conduits ou espaces annulaires 71-73, 75, définissant des passages de circulation de fluide non communicants les uns avec les autres, sont avantageusement utilisés pour permettre la circulation aller et retour de fluide de refroidissement, par exemple de l'eau, pour la régulation thermique des récipients, une paire de conduites étant préférentiellement utilisée pour refroidir la partie de corps des récipients et une autre paire de conduites étant préférentiellement utilisée pour refroidir les parties de col et de fond des récipients. Des orifices radiaux traversants sont prévus dans la chemise C ou les cassettes 102, 103 inférieure et intermédiaire pour relier les orifices radiaux 87b, 87c, 87d, 87e, 87f prévus sur le pourtour de l'arbre 87 aux orifices radiaux traversants prévus sur les deuxième à sixième étages d'orifices radiaux 82-86 du corps tubulaire 80.

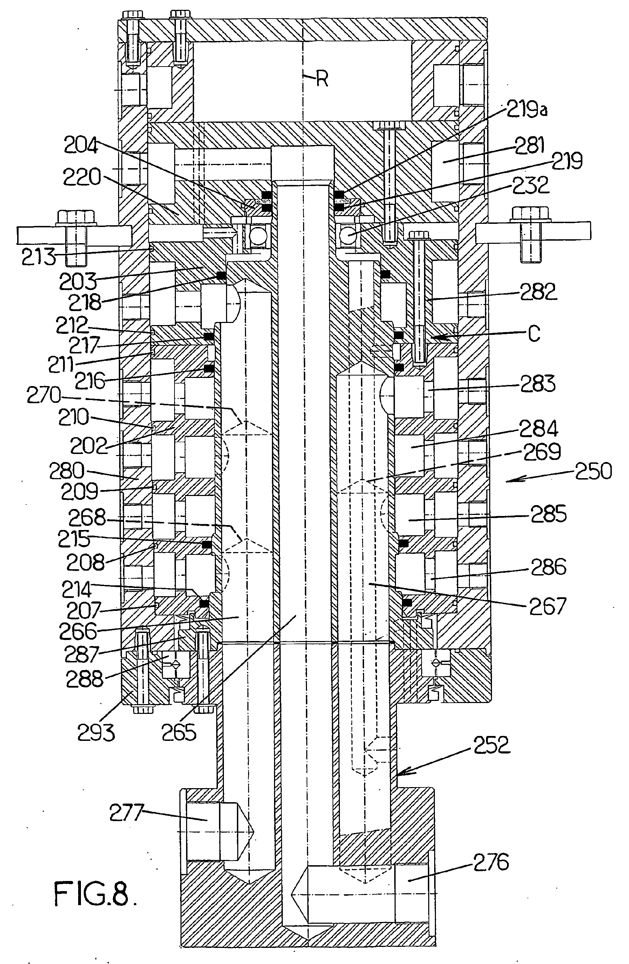

Nous nous reportons maintenant à la figure 8 qui est une vue en coupe longitudinale d'un deuxième mode de réalisation d'un élément de colonne formant raccord tournant selon l'invention.

Dans ce deuxième mode de réalisation, l'élément de colonne 250 comporte premier ensemble 252, fixe, pourvu de six conduits axiaux 265-270 ou trous de passage de fluides parallèles, trois de ces trous de passage 265-267 étant en traits pleins sur cette figure 8, les trois autres 268-270 apparaissant en tirets sur cette figure.

Ces conduits axiaux 265-270 parallèles s'étendent sur des longueurs différentes et communiquent chacun :
- en partie inférieure fixe de l'élément 250, avec un conduit radial d'alimentation 276-277 (uniquement deux conduits radiaux d'alimentation 276-277 étant représentés sur la figure 8 par mesure de lisibilité de la figure) ;
- en partie supérieure mobile de l'élément 250, avec des orifices radiaux 281-286 disposés sur une rangée donnée et prévus traversants une pièce tubulaire tournante ou corps tubulaire 280, un arbre 287 fixe et une chemise C.

Ainsi, de manière analogue à ce qui a été décrit précédemment en référence aux figures 2 à 7, le premier conduit axial 265, le plus interne, ou conduit axial central communique avec une première rangée d'orifices 281, les autres conduits 266-270 communiquant chacun avec une autre rangée d'orifices 282-286 radiaux.

L'élément 250 comporte, de manière analogue à ce qui a été décrit précédemment :
- un corps tubulaire 280 tournant externe pourvu d'un couvercle 293 inférieur vissé, et d'un couvercle supérieur ;
- un arbre 287 fixe pourvu d'orifices débouchant dans chaque étage d'orifices radiaux 281-286, cet arbre 287 s'étendant dans l'espace interne délimité par le corps tubulaire 280 ;
- un roulement 288 logé entre un arbre 287 fixe et le corps tubulaire 280 ;
- des joints 214- 219, 219a frottants entre l'arbre 287 et les cassettes 202-204, à savoir une première cassette 202, inférieure,, une seconde cassette 203, intermédiaire, et une troisième cassette 204, supérieure, la troisième cassette 204 supérieure étant montée avec des joints frottants 219, 219a autour de l'arbre 287 au débouché du conduit axial 265 central ;
- des joints 207-213 toriques entre les cassettes inférieure 202 et intermédiaire 203 et le corps tubulaire 280 ;
- un bouchon 220 central vissé sur la seconde cassette 203 intermédiaire ;
- un roulement 232 entre l'arbre 287 et la seconde cassette 203 intermédiaire.

Ainsi qu'il apparaît en figure 8, dans cette réalisation, un roulement 288 est placé dans une gorge formée par :
- un épaulement du couvercle 293 inférieur, épaulement sur lequel la bague extérieure du roulement 288 est en appui ;
- un épaulement ménagé dans une saillie annulaire du premier élément 254 fixe, épaulement sur lequel la bague intérieure du roulement 288 est en appui.

De manière alternative, dans chacun des modes de réalisation décrits ci-dessus, un collecteur électrique 10 tournant comme celui référencé en figure 1 peut être monté au-dessus de l'élément de colonne 50 ou 250.

Selon l'invention, il est ainsi obtenu une machine tournante de type carrousel comportant :
- un châssis tournant rotatif autour d'un axe de rotation ;
- plusieurs postes de travail supportés par le châssis tournant ;
- une colonne tournante d'alimentation en fluides, coaxiale à l'axe de rotation du châssis tournant ;
caractérisée en ce qu'elle comprend un élément de colonne 50, 250 pourvu de deux ensembles 52, 252 ; 53 mobiles en rotation l'un par rapport à l'autre, autour dudit axe de rotation, un premier ensemble 52, 252 comportant un faisceau d'au moins deux conduits axiaux, le second ensemble 53 comportant un corps tubulaire 80, 280 axial pourvu d'au moins deux étages traversants radiaux 81-86, 281-286, les conduits axiaux du premier ensemble 52, 252 s'étendant sur des longueurs différentes dans l'espace délimité par ledit corps tubulaire 80, 280, chaque conduit 65a, 70-73, 75 débouchant au droit d'un étage donné d'orifices traversants radiaux 81-86 ; 281-286 , l'élément de colonne 50, 250 définissant ainsi un raccord tournant de distribution d'au moins deux fluides vers les postes de travail de la machine, et en ce qu'une chemise C est interposée entre ledit corps tubulaire 80, 280 du second ensemble 53, préférentiellement mobile, et ledit premier ensemble 52, préférentiellement fixe. La chemise C est préférentiellement fixée de manière amovible au corps tubulaire 80, 280 du second ensemble 53.

Selon la première forme de réalisation de l'invention telle que décrite dans les figures 2 à 7, le premier ensemble 52 comprend un arbre 87 et au moins deux tubes 65-69 concentriques, le tube 65 le plus intérieur formant un premier conduit axial 65a débouchant au droit du premier étage d'orifices radiaux 81 traversants du corps tubulaire 80, lesdits au moins deux tubes 65-69 délimitant entre eux un espace axial annulaire 70-73, 75 formant un deuxième conduit axial débouchant au droit d'un deuxième étage d'orifices radiaux 82-86 traversants du corps tubulaire 80.

De manière alternative, selon la seconde forme de réalisation de l'invention telle que décrite dans la figure 8, le premier ensemble 252 comprend au moins deux conduits axiaux 265-269 parallèles débouchant chacun au droit d'un étage d'orifices radiaux 281-286 traversants du corps tubulaire 280.

Préférentiellement, le deuxième ensemble 53 est placé en partie supérieure de l'élément de colonne 50, 250.

Quant au premier ensemble 52, 252, il comprend un premier élément 54, inférieur, s'étendant en dessous du corps tubulaire 80, 280 et un deuxième élément 87, 287, supérieur, s'étendant dans l'espace délimité par le corps tubulaire 80, 280.

Avantageusement, le deuxième élément 87, 287 est pourvu de portées étagées externes sur lesquelles la chemise C est montée en appui ainsi que de portées étagées internes sur lesquelles viennent en appui des tubes 65-69 concentriques formant les espaces axiaux 65a, 70-73, 75. Le premier élément 54 est également pourvu d'épaulements 55-64 étagés sur lesquels viennent en appui les tubes 65-69 concentriques.

## Revendications

1. Machine tournante de type carrousel comportant :
- un châssis tournant rotatif autour d'un axe de rotation ;
- plusieurs postes de travail supportés par le châssis tournant ;
- une colonne tournante d'alimentation en fluides, coaxiale à l'axe de rotation du châssis tournant ;
**caractérisée en ce qu'**elle comprend un élément de colonne (50, 250) pourvu de deux ensembles (52, 252 ; 53) mobiles en rotation l'un par rapport à l'autre, autour dudit axe de rotation, un premier ensemble (52, 252) comportant un faisceau d'au moins deux conduits axiaux, le second ensemble (53) comportant un corps tubulaire (80, 280) axial pourvu d'au moins deux étages d'orifices traversants radiaux (81-86, 281-286), les conduits axiaux du premier ensemble (52, 252) s'étendant sur des longueurs différentes dans l'espace délimité par ledit corps tubulaire (80, 280), chaque conduit (65a, 70-73, 75) débouchant au droit d'un étage donné traversants radiaux (81-86, 281-286), l'élément de colonne (50, 250) définissant ainsi un raccord tournant de distribution d'au moins deux fluides vers les postes de travail de la machine, et **en ce qu'**une chemise C est interposée entre ledit corps tubulaire (80, 280) du second ensemble (53) et ledit premier ensemble (52, 252).

2. Machine tournante selon la revendication 1, **caractérisée en ce que** la chemise C est fixée de manière amovible au corps tubulaire (80, 280) du second ensemble (53).

3. Machine tournante selon la revendication 1 ou 2, **caractérisée en ce que** la chemise C est constituée de plusieurs cassettes (102-104 ; 202-204).

4. Machine tournante selon l'une quelconque des revendications précédentes 1 à 3, **caractérisée en ce que** le premier ensemble (52) comprend un arbre (87) et au moins deux tubes (65-69) concentriques, le tube (65) le plus intérieur formant un premier conduit axial (65a) débouchant au droit d'un premier étage d'orifices radiaux traversants (81) du corps tubulaire (80), lesdits au moins deux tubes (65-69) délimitant entre eux un espace annulaire (70-73, 75) formant un deuxième conduit axial débouchant au droit d'un deuxième étage d'orifices radiaux traversants (82-86) du corps tubulaire (80).

5. Machine tournante selon l'une quelconque des revendications 1 à 3, **caractérisée en ce que** le premier ensemble (252) comprend au moins deux conduits axiaux (265-269) parallèles débouchant chacun au droit d'un étage d'orifices radiaux traversants (281-286) du corps tubulaire (280).

6. Machine tournante selon l'une quelconque des revendications 1 à 5, **caractérisée en ce que** le premier ensemble (52, 252) est fixe, le deuxième ensemble (53) étant rotatif.

7. Machine tournante selon l'une quelconque des revendications 1 à 6, **caractérisée en ce que** le deuxième ensemble (53) est placé en partie supérieure de l'élément de colonne (50).

8. Machine tournante selon l'une quelconque des revendications précédentes 1 à 7, **caractérisée en ce que** le premier ensemble (52, 252) comprend un premier élément (54), inférieur, s'étendant en dessous du corps tubulaire (80, 280) et un deuxième élément (87, 287) supérieur, s'étendant dans l'espace délimité par le corps tubulaire (80, 280).

9. Machine tournante selon la revendication 8, **caractérisée en ce que** le deuxième élément (87) est pourvu de portées étagées externes sur lesquelles la chemise C est montée en appui.

10. Machine tournante selon l'une quelconque des revendications 8 ou 9, **caractérisée en ce que** le deuxième élément (87) est pourvu d'épaulements (95-99) étagés internes sur lesquels viennent en appui des tubes (65-69) concentriques formant les conduits axiaux (65a, 70-73, 75).

11. Machine tournante selon l'une quelconque des revendications 8 à 10, **caractérisée en ce que** le premier élément (54) est pourvu d'épaulements (55-64) étagés sur lesquels viennent en appui lesdits tubes (65-69) concentriques.

## Claims

1. A carousel-type rotating machine comprising:
- a rotating frame revolving about an axis of rotation;
- several workstations supported by the rotating frame; and
- a rotating fluid-supply column coaxial with the axis of rotation of the rotating frame;
**characterized in that** it comprises a column element (50, 250) provided with two assemblies (52, 252; 53) which are rotationally moveable relative to each other about said axis of rotation, a first assembly (52, 252) comprising a bundle of at least two axial conduits, the second assembly (53) comprising an axial tubular body (80, 280) provided with at least two levels of radial through orifices (81-86, 281-286), the axial conduits of the first assembly (52, 252) extending over different lengths in the space defined by said tubular body (80, 280), each conduit (65a, 70-73, 75) opening on a level with a given level of radial through orifices (81-86, 281-286), the column element (50, 250) thus defining a rotating connector for dispensing at least two fluids to the workstations of the machine, and **in that** a jacket C is interposed between said tubular body (80, 280) of the second assembly (53) and said first assembly (52, 252).

2. The rotating machine as claimed in claim 1, **characterized in that** the jacket C is fixed removably to the tubular body (80, 280) of the second assembly (53).

3. The rotating machine as claimed in claim 1 or 2, **characterized in that** the jacket C consists of a number of cartridges (102-104; 202-204).

4. The rotating machine as claimed in anyone of claims 1 to 3, **characterized in that** the first assembly (52) comprises a shaft (87) and at least two concentric tubes (65-69), the innermost tube (65) defining a first axial conduit (65a) opening on a level with a first level of radial through orifices (81) in the tubular body (80), said at least two tubes (65-69) defining between them an annular space (70-73, 75) defining a second axial conduit opening on a level with a second level of radial through orifices (82-86) in the tubular body (80).

5. The rotating machine as claimed in anyone of claims 1 to 3, **characterized in that** the first assembly (252) comprises at least two parallel axial conduits (265-269) each opening in a level with a level of radial through orifices (281-286) in the tubular body (280).

6. The rotating machine as claimed in anyone of claims 1 to 5, **characterized in that** the first assembly (52, 252) is fixed, the second assembly (53) being revolving.

7. The rotating machine as claimed in anyone of claims 1 to 6, **characterized in that** the second assembly (53) is positioned in the upper part of the column element (50).

8. The rotating machine as claimed in anyone of claims 1 to7, **characterized in that** the first assembly (52, 252) comprises a first lower element (54) extending beneath the tubular body (80, 280) and a second upper element (87, 287) extending in the space defined by the tubular body (80, 280).

9. The rotating machine as claimed in claim 8, **characterized in that** the second element (87) is provided with outer tiered bearing surfaces on which the jacket C rests.

10. The rotating machine as claimed in anyone of claims 8 or 9, **characterized in that** the second element (87) is provided with inner tiered shoulders (95-99) on which concentric tubes (65-69) defining the axial conduits (65a, 70-73, 75) rest.

11. The rotating machine as claimed in anyone of claims 8 to 10, **characterized in that** the first element (54) is provided with tiered shoulders (55-64) on which said concentric tubes (65-69) rest.

## Patentansprüche

1. Rotationsmaschine vom Typ Karussellmaschine, die:
- ein Drehgestell, das sich um eine Drehachse dreht,
- mehrere Arbeitsstationen, die von dem Drehgestell getragen werden, und
- eine Drehsäule für die Versorgung mit Fluiden, die zu der Drehachse des Drehgestells koaxial ist,
umfasst, **dadurch gekennzeichnet, dass** sie ein Säulenelement (50, 250), das mit zwei Einheiten (52, 252; 53) versehen ist, die in Bezug aufeinander um diese Drehachse drehbeweglich sind, umfasst, wobei die erste Einheit (52, 252) ein Bündel aus mindestens zwei axialen Leitungen und die zweite Einheit (53) einen axialen Rohrkörper (80, 280), der mit mindestens zwei Ebenen aus radialen Durchgangsöffnungen (81-86, 281-286) versehen ist, umfasst, die axialen Leitungen der ersten Einheit (52, 252) sich über unterschiedliche Längen in dem Zwischenraum erstrecken, der von dem Rohrkörper (80, 280) begrenzt wird, jede Leitung (65a, 70-73, 75) senkrecht zu einer gegebenen Ebene aus radialen Durchgangsöffnungen (81-86, 281-286) mündet und das Säulenelement (50, 250) so eine drehbare Versorgungsverbindung für mindestens zwei Fluide zu den Arbeitsstationen der Maschine bildet, und dass zwischen dem Rohrkörper (80, 280) der zweiten Einheit (53) und der ersten Einheit (52, 252) eine Einlage C eingefügt wird.

2. Rotationsmaschine nach Anspruch 1, **dadurch gekennzeichnet, dass** die Einlage C an dem Rohrkörper (80, 280) der zweiten Einheit (53) lösbar befestigt ist.

3. Rotationsmaschine nach Anspruch 1 oder 2, **dadurch gekennzeichnet, dass** die Einlage C von mehreren Kassetten (102-104; 202-204) gebildet wird.

4. Rotationsmaschine nach einem der Ansprüche 1 bis 3, **dadurch gekennzeichnet, dass** die erste Einheit (52) eine Welle (87) und mindestens zwei konzentrische Rohre (65-69) umfasst, wobei das innerste Rohr (65) eine erste axiale Leitung (65a) bildet, die senkrecht zu einer ersten Ebene aus radialen Durchgangsöffnungen (81) des Rohrkörpers (80) mündet und diese mindestens zwei Rohre (65-69) zwischen sich einen ringförmigen Zwischenraum (70-73, 75) begrenzen, der eine zweite axiale Leitung bildet, die senkrecht zu einer zweiten Ebene aus radialen Durchgangsöffnungen (82-86) des Rohrkörpers (80) mündet.

5. Rotationsmaschine nach einem der Ansprüche 1 bis 3, **dadurch gekennzeichnet, dass** die erste Einheit (252) mindestens zwei parallele axiale Leitungen (265-269) umfasst, die jeweils senkrecht zu einer Ebene aus radialen Durchgangsöffnungen (281-286) des Rohrkörpers (280) münden.

6. Rotationsmaschine nach einem der Ansprüche 1 bis 5, **dadurch gekennzeichnet, dass** die erste Einheit (52, 252) feststehend und die zweite Einheit (53) drehbar ist.

7. Rotationsmaschine nach einem der Ansprüche 1 bis 6, **dadurch gekennzeichnet, dass** die zweite Einheit (53) im oberen Teil des Säulenelements (50) angeordnet ist.

8. Rotationsmaschine nach einem der Ansprüche 1 bis 7, **dadurch gekennzeichnet, dass** die erste Einheit (52, 252) ein unteres erstes Element (54), das sich unterhalb des Rohrkörpers (80, 280) erstreckt, und ein oberes zweites Element (87, 287), das sich in dem von dem Rohrkörper (80, 280) begrenzten Zwischenraum erstreckt, umfasst.

9. Rotationsmaschine nach Anspruch 8, **dadurch gekennzeichnet, dass** das zweite Element (87) mit stufenförmigen Außenauflagen versehen ist, auf welchen die Einlage C aufliegend angebracht ist.

10. Rotationsmaschine nach Anspruch 8 oder 9, **dadurch gekennzeichnet, dass** das zweite Element (87) mit stufenförmigen Innenabsätzen (95-99) versehen ist, auf welchen konzentrische Rohre (65-69), die die axialen Leitungen (65a, 70-73, 75) bilden, zur Auflage kommen.

11. Rotationsmaschine nach einem der Ansprüche 8 bis 10, **dadurch gekennzeichnet, dass** das erste Element (54) mit Stufenabsätzen (55-64) versehen ist, auf welchen die konzentrischen Rohre (65-69) zur Auflage kommen.
